# EUROPEAN PATENT APPLICATION

(11) **EP 2 508 319 A1**
(43) Date of publication of application: **10.10.2012**
(21) Application number: 11161477.2
(22) Date of filing: 07.04.2011
(51) Int. Cl.: B29B 11/14, B65D 23/02, B65D 83/00, B65D 25/14, B65D 77/06, B29C 35/08, B29C 49/22, B29C 49/06, B29C 47/06, B29B 11/08, B29C 45/16

(54) **Preform for blow-moulding a dispensing bag-in-container, process for producing a dispensing bag-in-container and bag-in-container**

(71) Applicant: Anheuser-Busch InBev NV, 1000 Brussel (BE)
(72) Inventor: Peirsman, Daniel, 1000 Brussel (BE); Van Hove, Sarah, 1000 Brussel (BE)
(74) Representative: BiiP cvba

(57) **Abstract**

The present invention concerns a preform (1) for blow-moulding a dispensing bag-in-container (2), said preform comprising an inner layer (1B) and an outer layer (1A), wherein said preform (1) forms a two layer container (2) upon heating followed by blow-moulding, and wherein the obtained inner layer (2B) of said container releases from the obtained outer layer (2A) upon introduction of a pressurized gas at a point of interface (4) between said two layers; **characterized in that**,
the inner and/or outer layers (1A,1B) include at least one additive in a concentration such that the difference in heating rates, Δ(dT/dt) = dTₒᵤₜ / dt - dTᵢₙ / dt, between the outer and inner layers, upon heating the preform in a radiation oven emitting in a given radiation wavelength spectrum, is positive and greater than in the absence of said at least one additive.
The present invention also concerns a process for producing a dispensing bag-in-container and a bag-in-container.

## Description

### Field of the Invention

The present invention relates in general to further improvements in dispensing bag-in containers and, in particular, to integrally blow-moulded bag-in-containers. It also relates to a method for producing bag-in-containers and, in particular, to preforms used for their production.

### Background of the Invention

Bag-in-containers, also referred to as bag-in-bottles or bag-in-boxes depending on the geometry of the outer vessel, all terms considered herein as being comprised within the meaning of the term bag-in-container, are a family of liquid dispensing packaging consisting of an outer container comprising an opening to the atmosphere - the mouth - and which contains a collapsible inner bag joined together to said container and opening to the atmosphere at the region of said mouth. The system must comprise at least one vent fluidly connecting the atmosphere to the region between the inner bag and the outer container in order to control the pressure in said region to squeeze the inner bag and thus dispense the liquid contained therein.

Recent developments in the production of bag-in-containers focused on "integrally blow-moulded bag-in-containers", produced by blow-moulding a polymeric multilayer preform into a container comprising an inner layer and an outer layer, such that the adhesion between the inner and the outer layers of the thus produced container is sufficiently weak to readily delaminate upon introduction of a gas at the interface. The "inner layer" and "outer layer" may each consist of a single layer or a plurality of layers, but can in any case readily be identified, at least upon delamination. Said technology involves many challenges and many alternative solutions were proposed. Integrally blow-moulded bag-in-containers cannot be confused with containers provided with a removable liner, which function is not to drive the dispensing of liquid out of the container, but simply to ensure hygienic conditions when re-using the lined container. Indeed, the inner liner can be removed from the interior of the container when it is empty. Such removable liners are not designed to collapse such as to contain the liquid and drive the flow of liquid out of the container in a controlled manner. An example of such container with removable liner is disclosed e.g., in WO91/08099.

The multilayer preform may be extruded or injection moulded (cf. US-A-6,238,201, JP-A-10128833, JP-A-11010719, JP-A-9208688, US-A-6,649,121). When the former method is advantageous in terms of productivity, the latter is preferable when wall-thickness accuracy or specific neck geometries are required, typically in containers for dispensing beverage.

The formation of the vents fluidly connecting the space or interface between inner bag and outer container to the atmosphere remains a critical step in integrally blow-moulded bag-in-containers and several solutions were proposed in e.g. US-A-5,301,838, US-A-5,407,629, JP-A-5213373, JP-A-8001761, EP-A-1,356,915, US-A-6,649,121, JP-A-10180853. A preferred solution is, however, disclosed in W02008/129012. Vents geometry strongly depends on the means used for creating a pressure difference between the interior of the bag (containing the liquid) and the exterior of the bag (i.e., in the space or interface between inner and outer layers of the container). Said means may be simply gravity driven, by positioning the inlet of the dispensing duct below the level of liquid like in old oak barrels for wine or in soap dispensers in public washrooms, but more advantageously, they comprise either means for increasing the pressure outside the inner bag or, alternatively, decreasing the pressure inside the inner bag, such as with a pump. If the pressure is being increased outside the bag, such dispensing system is referred to herein as a "pressure dispensing" system, whilst a "vacuum dispensing" system refers to systems where the pressure inside the container is decreased. A pump may be used in both pressure and vacuum dispensing systems. For pressure dispensing systems, however, other means can be used such as pressurized gas stored in a pressure cartridge and/or adsorbed on a carrier. Said means for storing pressurized gas may be provided either in the container or in the appliance. If a source of pressurized gas external to the container is used, the dispensing appliance shall require at least a second, gas tube to be connected to a corresponding aperture in the closure or container body to bring said source in fluid communication with the interior of the container. In pressure driven dispensing bag-in-containers, the vents must be suitable for receiving a pressurized gas duct connected to a source of pressurized gas, as disclosed in W02008/129012. In gravity dispensing systems as well as vacuum dispensing systems, the vents are there solely to balance the pressure between inner and outer layer with ambient upon dispensing, and concomitant collapse of the inner bag. For this reason, the vents in such systems, unlike with pressure driven systems, must be in fluid communication with ambient and can be located anywhere in the body of the container or at the neck thereof, but clear from any sealing member of a closure or other fixture.

Another problem with integrally blow-moulded bag-in-containers is the choice of materials for the inner and outer layers which must be selected according to strict criteria of compatibility in terms of processing on the one hand and, on the other hand, of incompatibility in terms of adhesion. These criteria are sometimes difficult to fulfil in combination. This problem does not arise in the field of blow-moulding co-layered plastic containers, wherein the adhesion between layers is maximized in order to avoid delamination, because best adhesion is obtained with similar materials, which generally have similar thermal properties. Consequently, finding materials being compatible in terms of processing and adhesion as for the fabrication of co-layered containers is generally less problematic than finding materials being compatible in terms of processing and incompatible in terms of adhesion as for the fabrication of bag-in-containers.

Yet another dual problem with integrally blow-moulded bag-in-containers are the highly different structural requirements for, on the one hand, the inner bag, which must be sufficiently flexible and tear resistant to allow proper collapse of the bag upon dispensing and, on the other hand, the outer container which must be stiff and strong to provide structural support and withstanding pressure built up in the container during dispensing. These radically opposed structural requirements for the inner and outer layers, narrow the blow-moulding processing window to a large extent as crystallisation of the inner layer is to be controlled such as to reduce brittleness and to increase flexibility thereof, whereas the crystallinity of the outer layer must be controlled to enhance structural (mechanical) strength. Crystallinity is controlled by both thermal and shear stress conditions during the blowmoulding process, the level of shear stresses being dependent on the temperature which controls the relaxation time of the polymeric materials.

Surprisingly it has been described in W02008/129016 that excellent delamination results between the inner and outer layers can be obtained also with preforms wherein both inner and outer layers consist of the same material. Similar results were obtained both with preform assemblies as well as with integral preforms. In case of integral, over-moulded preforms, it is generally believed that improved results are obtained with semi-crystalline polymers.

The same polymer is considered in contact on either side of the interface between the inner and outer layers in the following cases:
- Inner and outer layers consist of the same material (e.g., PETᵢₙₙₑᵣ-PETₒᵤₜₑᵣ, regardless of the specific grade of each PET); or
- The inner and outer layers consist of a blend or copolymer having at least one polymer in common, provided said polymer in common is at the interface, whilst the differing polymer is substantially absent or in minor amounts at said interface (e.g., (0.85 PET + 0.15 PA6)ᵢₙₙₑᵣ (0.8 PET + 0.2 PE) outer.

The presence in a layer of low amounts additives is not regarded as rendering the material different.

Although in case the same material is used for the inner and outer layers, there is no difference in blow-moulding temperature between the layers, the heating rate of the two layers can be substantially different due to the wide difference in thicknesses between the inner and outer layers. Moreover, the inner layer is sheltered by the thick, outer layer from the IR-radiation of the IR-oven usually used to bring the preform to blow-moulding temperature. It follows that even for materials having little or no difference in blow-moulding temperatures, there can be a problem to heat a two-layer preform such that both layers reach their processing temperatures simultaneously. In order to overcome the problem of different heating rates of the materials forming the inner and outer layers of blow-moulded multilayer containers, W02008/129013 proposes to include at least one energy absorbing additive allowing both inner and outer layers to reach their respective blow-moulding temperatures substantially simultaneously upon heating the preform in a single oven.

But in some cases, it is preferable to use different materials to optimize the functions of each layer. EP-A-1,356,915 and US-A-6,649,121 proposed that the melting temperature of the outer layer should be higher than the one of the inner layer in order to allow production of integral preforms by injection moulding the outer layer first, followed by the injecting thereover the inner layer. Examples of materials for the outer layer disclosed in EP-A-1,356,915 and US-A-6,649,121 include PET and EVOH, whilst polyethylene is given as an example for the inner layer. Though this materials selection could result advantageous for the injection moulding production of the preforms, it is far from optimal for the blow-moulding step since polyethylene and PET are characterized by quite different blow-moulding temperatures. Again, in US-A-6,238,201 a method is described including co-extruding a two layer parison followed by blow-moulding said parison into a bag-in-container wherein the outer layer preferably comprises an olefin and the inner layer an amorphous polyamide (i.e., having no melting temperature).

Concerning the materials choice for a weak interfacial adhesion required for ensuring proper delamination of the inner layer from the outer layer upon use, mention is made in JP-A-2005047172 of "mutually non-adhesive synthetic resins." In the review of the background art in US-A-5,921,416 the use of release layers interleafed between the inner and outer layers, forming three- or five-layer structures in mentioned. An example of such layer is described in US-A-5,301,838 which discloses a complex five layer preform comprising three PET layers interleafed by two thin layers of a material selected from the group of EVOH, PP, PE, PA6. Here again, beside the complexity involved with the production of such preforms, substantial differences in blow-moulding temperatures characterize these different materials.

It can be seen from the above that materials with widely differing blow moulding temperatures, T_{bm}, may be used for the inner and outer layers. For example, a typical blow moulding temperature for PET is about 105°C, for PVC around 90°C, for PP about 140-150°C, and for PAN it is around 120°C. Such broadly differing blow moulding temperatures —in particular if the inner layer has a blow moulding temperature substantially lower than the outer layer— may lead to problems when heating together the inner and outer layers in an IR oven. The foregoing documents do not give a solution on how to heat by IR radiation the outer layer at a desired high blow moulding temperature without overheating the inner layer.

It follows from the foregoing that there remains a need in the art for solutions for producing integrally blow-moulded bag-in-containers with an inner layer having a blow moulding temperature substantially lower than the outer layer and still displaying the required properties to fulfil their respective functions such as low adhesion at their interface to allow controlled collapse of the inner bag upon dispensing for a larger variety of materials, gas barrier properties, and the like..

### Summary of the Invention

The present invention is defined in the appended independent claims. Preferred embodiments are disclosed in the dependent claims. In particular, the present invention relates to a preform for blow-moulding a dispensing bag-in-container, said preform comprising an inner layer and an outer layer wherein said preform forms a two layer container upon heating followed by blow-moulding, and wherein the obtained inner layer of said container releases from the obtained outer layer upon introduction of a pressurized gas at a point of interface between said two layers; wherein the inner and/or outer layers) include at least one additive in a concentration such that the difference in heating rates, Δ(dT/dt) = dTₒᵤₜ / dt - dTᵢₙ / dt , between the outer and inner layers, upon heating the preform in a radiation oven emitting in a given radiation wavelength spectrum, is positive and greater than in the absence of said at least one additive.

In order to shorten the heating time of the preform prior to blow-moulding, it is preferred that the type and amount of additives in at least the inner layer of said preform are such as to allow both inner and outer layers to reach their desired blow-moulding temperatures, T_{bm,in} and T_{bm,out}, substantially simultaneously upon heating the preform in said radiation oven.

The inner and outer layers of the preform of the present invention are preferably made of different materials, although they may consist of the same polymer material. In particular, the inner and outer layers each comprise a semicrystalline material, preferably selected from PET, PEN, PTT, PA, PP, PE, HDPE, EVOH, PGAc, PLA, and copolymers thereof. The present application is most efficient if the inner layer is made of a polymer having a blowmoulding temperature lower that the one of the outer layer. In a preferred embodiment, the difference in blow moulding temperatures, ΔT_{bm} = T_{bm,out} - T_{bm,in}, between the outer and the inner layers is at least 5°C, preferably at least 10°C, more preferably, at least 20°C, most preferably, at least 30°C.

The at least one additive present in at least the outer layer is preferably selected from the group of energy absorbing additives and colorants characterized by an absorption spectrum having peaks in the wavelength range.comprised between 700 and 20,000 nm, preferably, between 1,000 and 15,000 nm, more preferably between 5,000 and 12,000 nm, most prefetably between 6,000 and 10,000 nm. In particular, the energy absorbing additives may be selected from one or several of carbon black, graphite, diamond dust, diazonium salts, sulphonium salts, sulphoxonium salts, iodonium salts, and metal powders such as titanium, aluminium, vanadium, and the like.

Alternatively, or additionally, the inner layer may comprise an additive reflecting at least a portion of a radiation ranging from 700 and 20,000 nm, preferably, between 1,000 and 15,000 nm, more preferably between 5,000 and 12,000 nm, most prefetably between.6,000 and 10,000 nm.

The present invention also concerns a process for producing a dispensing bag-in-container comprising the following steps:
- providing a radiation oven emitting radiation in a given wavelength spectrum;
- providing a preform as discussed supra;
- heating the inner and outer layers of said preform to their respective blow-moulding temperatures, T_{bm,in}, T_{bmout}, in said radiation oven;
- transferring the thus heated preform to a blowmoulding tool,
- blow-moulding the thus heated preform to form a bag-in-container.

Any of the preforms discussed above can advantageously be used in the process of the present invention. It is preferred that the blowmoulding temperature, T_{bm,in}, of the inner layer is lower than the one, T_{bm,out}, of the outer layer. By optimizing the amounts of heat additives in the outer and, optionally, the inner layers to the particular radiation wavelength spectrum emitted by the lamps of the radiation oven, it is possible that both the inner layer and the outer layer reach their desired blow-moulding temperatures, T_{bm,in}, T_{bm,out}, substantially simultaneously upon heating the preform in said radiation oven, even if their respective blow moulding temperatures differ by a substantial amount, ΔT_{bm}. This is not only advantageous in terms of processing time and energy management, but also in terms of thermal degradation, because if the heating of the preform must be prolonged to allow the outer layer to reach its blow moulding temperature, T_{bm,out}, whilst the inner layer has already reached its own blow moulding temperature, T_{bm,in}, the latter will be overheated above its blow moulding temperature and possibly undergo some thermal degradation.

Any type of radiation oven can be used in the frame of the present invention and are available off the shelves on the market. For example, an infrared oven emitting radiations at least in a wavelength range.comprised between 700 and 20,000 nm, preferably, between 1,000 and 15,000 nm, more preferably between 5,000 and 12,000 nm, most prefetably between 6,000 and 10,000 nm, is particularly suitable for the present process.

The present invention also concerns a bag-in-container made by a process as defined above. It is characterized by a broad range of possible materials to be used for the inner and outer layers, respectively, which choice is based on e.g., mechanical properties of a layer in the final product, the gas barrier properties thereof, ease of preform manudacturing, and the like, all parameters that may differ substantially for the inner and outer layers, respectively.

### Brief description of the Drawings

Figure 1 is a schematic cross-sectional representation of (a) a first and (b) second embodiments of a preform according to the present invention and (c) a bag-in-container obtained after blow-moulding the foregoing preforms.
Figure 2: is a schematic representation of the temperature profile as a function of time of the inner and outer layers of a preform according to the present invention (a) in the radiation oven and (b) throughout the blow-moulding process.
Figure 3: schematic representation of (a) the transmission of a radiation through a first, outer layer and a second, inner layer, and (b) the temperature profile at a given time across the inner and outer layers.

### Detailed description of a preferred embodiment

In the description, the following definitions have been applied for:
- "Semicrystalline polymer" means a polymer exhibiting both amorphous and crystalline regions when cooled to an equilibrium state below melting point;
- "Crystallinity" means the volume fraction of the semicrystalline polymer that is packed in the crystalline state. Crystallinity of a polymer can be determined by different methods well known to the person skilled in the art including, measurement of the area under the endothermic melting peak in a DSC graph, by wide angle X-ray diffraction, by micro-hardness measurement methods, by Raman spectroscopy, and the like.
- "Heating rate" means the change (increase) in temperature over time (dT / dt), wherein T is the temperature and t is the time.

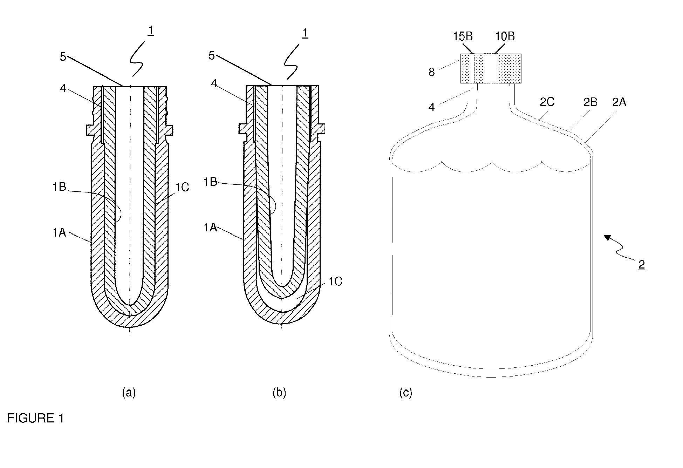

Figures 1 (a)&(b) illustrate two embodiments of a preform 1 according to the present invention and Figure 1(c) shows an integrally blow-moulded bag-on-container (2) obtainable by blowmoulding such preforms (1). The preforms (1) illustrated in Figures 1 (a)&(b) comprise an inner layer (1 B) and an outer layer (1 A) both having a tube like body with a closed end and a neck region defining a mouth (5). The inner layer (1 B) and outer layers (1A) are joined at least at the level of the neck region by an interface (shown on the right hand side). The region (1 C) between inner and outer layers (1 B) and (1A) may either consist of an interface, wherein the two layers are substantially contacting each other as illustrated in Figure 1(a), or comprise a gap in fluid communication with at least one vent (4) opening to the atmosphere as illustrated in Figure 1 (b).

As discussed in the introductory section, many vent geometries have been disclosed, and it is not particularly critical to the present invention which geometry is selected. It is preferred, however, that the vent (4) be located adjacent to, and oriented coaxially with said preform's mouth (5) as illustrated in Figures 1 (a)&(b). More preferably, the vents have the shape of a wedge with the broad side at the level of the opening thereof and getting thinner as it penetrates deeper into the vessel, until the two layers meet to form an interface (1 C) at least at the level of the neck region. This geometry allows for a more efficient and reproducible delamination of the inner bag upon use of the bag-in-container. The container may comprise one or several vents evenly distributed around the lip of the bag-in-container's mouth. Several vents are advantageous as they permit the interface of the inner and outer layers (2B) and (2A) of the bag-in-container 2 to release more evenly upon blowing pressurized gas through said vents. Preferably, the preform comprises two vents (4) opening at the vessel's mouth lip at substantially diametrically opposed positions. More preferably, three, and most preferably, at least four vents open at regular intervals of the mouth lip.

According to general practice, a multiple layer preform is produced by separately injection moulding the inner layer (1B) and the outer layer (1A) and subsequently assembling the multiple layer preform 1 by fitting the inner layer (1 B) into the outer layer (1A). This solution, referred to as "preform assembly," allows for greater freedom in the design of the neck and vents. Alternatively, the preform can be obtained by injection moulding one layer on top of the other. The latter embodiment referred to as "integral preform" is advantageous over the preform assembly in that it comprises no assembly step and one production station only is required for the preform fabrication. On the other hand, the design of the vents in particular is restricted by this process and adhesion issues between inner and outer layers (1 A, 1 B) arise already at the stage of preform production. The inner preform (1B) may be injected into the outer preform (1A) as proposed in most literature reviewed in the introductory section. Alternatively, the outer preform (1 A) may be injected over the inner preform (1 B). It is clear that the choice of one of the foregoing two options may be dictated to some extent by the thermal properties of the polymers of the inner and outer layers.

A preform for the production of a typical 8 liter bag-in-container for dispensing beer typically has an outer layer (1A) of thickness comprised between 2.5 and 6 mm, preferably between 3.0 and 5.0 mm, most preferably between 3.5 and 4.5 mm, whilst the inner layer (1 B) generally has a thickness comprised between 1.0 and 4.0 mm, preferably between 1.5 and 3.5 mm, most preferably between 2.0 and 3.0 mm.

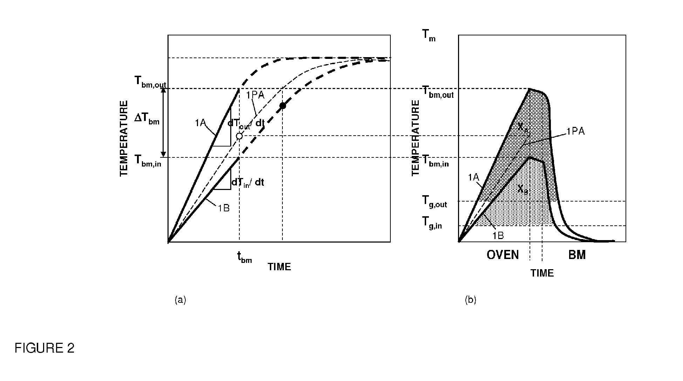

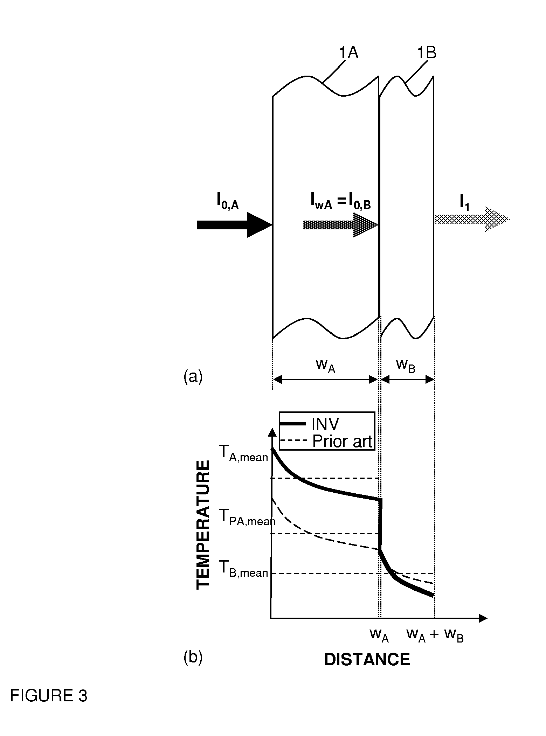

Preferred materials for the inner and outer layers (1 B) and (1 A) of the preform and bag-in-container of the present invention are pairs of the same or different, preferably semicrystalline, materials selected from the group of polyesters like PET, PEN, PTT, PTN; polyamides like PA6, PA66, PA11, PA12; polyolefins like PE, PP; EVOH; biodegradable polymers like polyglycol acetate (PGAc), polylactic acid (PLA); and copolymers and blends thereof. The preform (1) must be heated before blow-moulding to blow-moulding temperature, T_{bm}, which for semi-crystalline polymers is comprised between glass transition temperature, Tg, and melting temperature, Tₘ, of each layer (1A, 1 B). According to the present invention, at least the outer layer (1B) comprises at least one additive in a concentration such that the difference in heating rates, Δ(dT/dt) = dTₒᵤₜ / dt - dTᵢₙ / dt , between the outer and inner layers, upon heating the preform in a radiation oven emitting in a given radiation wavelength spectrum, is positive and greater than in the absence of said at least one additive. In the following, such additives are sometimes referred to as "heat additives" when a distinction from other types of additives is considered necessary. Heat additives can be "absorbing heat additives" in case they absorb a substantial portion of the energy of the incident radiation, or can be "reflective heat additives" if they reflect a substantial portion of the incident radiation. The latter if present at all, shall be present in the inner layer (1 B) only. Of course, it is also possible that both layers comprise energy absorbing additives of different nature and/or in different amounts, as long as the compositions of the inner layer (1B) and outer layer (1A) are such as to allow heating the inner layer (1B) at a higher rate than the outer layer (1A) when heating the preform in said radiation oven. In an alternative embodiment, the inner layer comprises additive capable of reflecting at least a portion of radiation in infrared wavelength region, such as to reflect it back towards the outer layer (1A). The right amount of additives depends on a number of parameters such as the material and thickness of the inner and outer layers (1A, 1B), the type of heat additive used, the type and power of radiations irradiated onto the preform and the like. For a given oven, the heating rates, dT / dt, of the inner and outer layers (1 A, 1 B) can easily be determined by means well known to the person skilled in the art. For instance, a first and a second thermocouples can be applied to the inner and outer layers (1A, 1 B), either bonded to a surface thereof, or inserted into a small hole to measure a mean temperature, Tₘₑₐₙ, across the thickness of the layers, as illustrated in Figure 3(b). The thermocouples can be connected to a printer or a data acquisition system to obtain heating curves as illustrated in Figure 2(a). Alternatively, quite performant IR imaging systems can be used to get a picture of the temperature distribution through the preform at different residence times in the oven. The skilled person is therefore in a position to find the proper compositions of the inner and outer layers and determine without ambiguity whether a preform is according to the present invention with a very few trials.

The heat absorbing additives that can be used in the outer layer (1A) of the present invention may be any compound that selectively absorbs radiation in the wavelength region comprised between 700 and 20,000 nm, preferably, between 1,000 and 15,000 nm, more preferably between 5,000 and 12,000 nm, most prefetably between 6,000 and 10,000 nm. The heat additives should preferably be sufficiently fine not to be visible to the naked eye and may comprise energy absorbing additives and colorants. Examples of energy absorbing additives include but are not limited to carbon black, graphite, diamond dust, diazonium salts, sulphonium salts (e.g., triphenylsulphonium bromide), sulfoxonium salts, odonium salts, metal powder such as Al, V, Ti, etc.

The amount of heat additive present in a layer depends on the additive itself and on the polymers used for the inner and outer layer (1B, 1A), as well as their thicknesses, and the wavelength of the radiation. Generally speaking assuming the inner layer (1A) is devoid of heat absorbing or reflective additives, the heat additives are preferably present in the oueter layer (1A) in an amount comprised between 0.05 and 10 wt.% with respect to the total weight of the outer layer (1A), preferably, between 0.1 and 5 wt.%, more preferably between 0.2 and 3 wt.%, most preferably between 0.5 and 2 wt.%. If the inner layer (1 B) comprises heat absorbing additives, the above ranges shall apply to the difference in concentration between inner and outer layer, ΔC = Cᵢₙ - Cₒᵤₜ, wherein c refers to the heat absorbing additive concentration in wt.%, and the subscripts in and out to the inner and outer layers, respectively. If the heat additives are present in too large amounts, they may impair stretchability of the layers and if the additives are present in too small amounts, the desired enhanced heating rate of the outer layer (1A) with respect to the inner layer (1 B), may not be fulfilled.

The two layers (1B) and (1A) of the preform may be connected by an interface (1C) throughout substantially the whole inner surface of the outer layer (1A) and outer surface of the inner layer (1B). Such preforms, as illustrated in Figure 1(a) can be an integral preform, but also a preform assembly with inner preform element fitting snugly into the outer preform element. Inversely, they may be separated over a substantial area of the preform's body by a gap (1C) containing air and which is in fluid communication with at least one interface vent (4) as illustrated in Figure 1 (b). The latter embodiment is easier to realize when using a preform assembly designed such that the inner preform element is firmly fixed to the outer preform element at the neck region and a substantial gap (1 C) may thus be formed between inner and outer layers (1 B) and (1A).

The preform of the present invention is placed into an radiation oven, preferably a infrared oven, more preferably with quartz or ceramic lamps, optionally comprising a coating. All infrared sources emit not a single wavelength but a range of wavelengths. The peak wavelength emitted is dictated by the surface temperature of the emitter which can easily be controlled using closed loop or open loop control. For preheating a polymeric preform prior to blow-moulding, an infrared oven may conveniently be used, emitting in a wavelength range comprised between 700 nm and 20,000 nm, preferably between 1000 and 12,000 nm, more preferably between 2000 and 5000 nm. Infrared ovens suitable for heating a preform prior to blowmoulding can be found easily on the market. For example, the company Lonhon (CN) offers a range of blowmoulding apparatuses with IR-oven and blow moulding tool. The radiation emitting sources, e.g., quartz lamps, are located outside of the preform 1 resulting in the inner layer (1 B) being exposed to a radiation of lower intensity than the outer layer (1A) because of the partial absorption of the radiation by the outer layer (1A) (cf. Figure 3(a)). The absorption of a radiation travelling through a medium can be described by the Beer-Lambert law. The radiation absorption by the outer layer may account for a difference in heating rates between the inner and outer layer of a few percents, which Is convenient only in case the blow moulding temperature, T_{bm,out}, of the outer layer is greater than the blow moulding temperature, T_{bm,in}, of the inner layer of a few degrees Celsius. In case the blow moulding temperatures, T_{bm,in}, T_{bm,out}, of the inner and outer layers differ by e.g., at least 5°C, preferably at least 10°C, more preferably at least 20°C, or most preferably, at least 30°C, then the two layers will not reach their respective blow moulding temperatures substantially together, and the inner layer may be overheated, with the risk of thermal degradation due to prolonged exposure to IR radiation.

With a preform according to the present invention, however, the outer layer is heated at a heating rate, dTₒᵤₜ / dt, higher than it would in the absence of heat additive, so that it may reach its blow moulding temperature, T_{bm,out}, substantially simultaneously with the inner layer reaching its own blow moulding temperature, T_{bm,out}, even if the latter is substantially lower than the former. One advantage of the present invention can be seen in Figure 2(a) wherein the heating curve (1A) of a layer comprising heat additives, is steeper than the curve (1 PA) of a similar outer layer absent any heat additive. It can be seen that with the heat additive, the outer layer (1A) reaches its blow moulding temperature, T_{bm,out}, substantially simultaneously with the inner layer (1 B) as it reaches its own, T_{bm,in}. Absent any or sufficient heat additive in the outer layer, it can be seen that the curve (1 PA) of a prior art outer layer would not have reached its desired blow moulding temperature, T_{bm,out}, when the inner layer (1 B) did. Two options are therefore open: either blow moulding is carried out with the outer layer (1 PA) at a temperature below the desired blow moulding temperature, T_{bm,out}, (cf. white spot in Figure 2(a)), or the inner layer (1 B) is left to heat at a substantially higher temperature than the desired blow moulding temperature, T_{bm,in} (cf. black spot in Figure 2(a)). The former option is detrimental to the blow moulding process and will affect stretchability and crystallinity of the outer layer. The latter option may lead to thermal degradation of the inner layer, and too little stability to undergo the stretching during blow moulding. With the present invention, hitherto thermally incompatible materials can be combined to form the inner and outer layers of an integrally blow moulded bag-in-container.

Under the effect of the heat additives included therein, the outer layer (1A) absorbs more energy from the incident radiation of intensity, I_{O,A}, than in the absence of any heat additive. It follows that the radiation transmitted to the inner layer (1 B) has yet a lower intensity, I_{O,B} , than in the absence of additive in the outer layer and is therefore heated more slowly. The difference in heating rates, Δ(dT/dt) = dTₒᵤₜ / dt - dTᵢₙ / dt , between the outer and inner layers, upon heating the preform in a radiation oven emitting in a given radiation wavelength spectrum, is therefore the result of
(a) the outer layer heating more quickly, due to heat absorption by the additive comprised therein,
(b) the fact that I_{O,B} < I_{O,A} as described by the Beer-Lambert law, and
(c) the inner layer heating more slowly, because shielded more strongly by the outer layer loaded with heat absoribing additive,

This is illustrated in Figure 3(b) showing the temperature distribution across the thickness of a two layer preform at a given moment in time (w is the width and the subscripts A and B refer to the outer and inner layers (1 A, 1 B), respectively). The outer layer (1A) comprising a heat absorber in accordance with the present invention is at a higher temperature (thick solid line) than a similar outer layer absent any heat absorbing additive (thin dashed line). Inversely, the inner layer (1 B) in a preform according to the present invention is at a slightly lower temperature than its prior art counterpart, because the former is more severely sheltered from the radiation by the heat absorber loaded outer layer (1A). This allows to use a material for the outer layer (1A) having a blow moulding temperature substantially higher than the material of the inner layer, to extents not yet reached to date.

Upon blow-moulding a thus heated preform according to the present invention, a bag-in-container (2) is obtained having an outer container (2A) formed in the tool cavity out of the outer layer (1A) of the preform and an inner bag (2B) formed out of the inner layer (1B) of the preform. The outer container (2A) provides mechanical strength and structure, while the inner bag (2B) is flexible to enhance collapsibility upon dispensing of a fluid contained in the inner bag (2B) upon use of the bag-in-container (2) and must act as gas barrier for gas sensitive liquids as well as for holding carbon dioxide in carbonated beverages such as beer.

It has been observed that the adhesion between inner and outer layers (2A, 2B) of a thus formed bag-in-container (2) greatly depends on the surface structure of each layer at their interface (2C). Actually, poor adhesion of the two layers can even be obtained with two layers made of the same material provided, e.g., their respective crystallinity is so controlled as to be sufficiently different and unmatching as to not form a strong bond. The crystallinity of the inner and outer layer can be controlled by temperature and shear, the latter being dependent on the former. Control of the temperature of a two layer preform heated in a single radiation oven is quite restricted. With a preform according to the present invention it is possible to control the temperatures of the inner and outer layers and thus control the interfacial strength between the inner and outer layer of a blowmoulded bag-in-container (2). It means that the present invention not only allows materials having substantially different blow moulding temperatures to be combined, but even with materials having similar blow moulding temperatures, it is possible to optimize the properties of the final blow-moulded product.

Before blow-moulding, the preforms are heated in a radiation oven such that each layer reaches a blow-moulding temperature, T_{bm,i}, comprised between their glass transition temperature, T_{g,i}, and melting temperature, T_{m,i}, i.e., T_{g,i} < T_{bm,i} < T_{m,i}, wherein the subscript i refers to the inner or outer layer (1A, 1 B). During this heating process, the polymers of the inner and outer layers undergo stress relaxation and some crystallization.

The preform, with both inner and outer layers heated at a temperature above their respective Tg, is then rapidly transferred from the oven to the blow-moulding tool, to which it is clamped at the neck region. Heated air is injected through the mouth (5) into the softened inner layer (1 B), which is stretched, pushing forward the outer layer (1 A), until the latter reaches the wall of the tool cavity, where both layers are cooled close to or even below their respective Tg prior to extraction. In most applications, the preform is stretched bi-axially, sometimes assisted by a piston driven down into the parison to stretch it in the longitudinal direction prior to blowing gas to stretch the preform in the radial direction. Bi-axial stretching has the advantage of yielding an outer layer with higher stiffness. During this process, the two layers undergo severe shear stresses, which enhance crystallization (cf. e.g., Guo, J., and Nahr, K., Adv. Polym. Technol., 21, 214 (2002)). The inner layer is strained more than the outer layer, since the inner layer forms contact with the outer layer when the latter reaches the tool wall, and at this stage the latter has become substantially thinner. The outer layer (2A) cools more rapidly than the inner layer (2B), because it contacts the cooled tool wall. The crystallinity of the inner layer can yet be reduced compared with the one of the outer layer which must provide the structural integrity of the product, by heating the inner layer to a blow moulding temperature at which its relaxation time is shorter than the one of the outer layer, so that less shear stresses are applied to the inner layer than to the outer upon blow moulding. At any stage of the whole process, including preform manufacturing for integral preforms, wherein the layers are at a temperature above Tg, there is a risk of creating a bond between the inner and outer layers with an interfacial strength too high for the use of dispensing bag-in-containers. Referring to the prior art revised in the review of the background art, it remains to date a challenge to blow-mould a dispensing bag-in-container (2) out of a two layer preform (1) with the required weak interfacial bond between inner and outer layers (2A, 2B), and it is taught to carefully select the materials for their bonding incompatibility, thus compromising the other properties of each layer, such as stiffness of the outer layer and flexibility, gas barrier properties, and food compatibility of the inner layer. Large amounts of release coatings are often applied between inner and outer layers of the preform, which are detrimental to the economics of the product and often comprise fluorinated components not always compatible with food regulations. Furthermore, the outer container (2A) must be rigid to provide the necessary structural resistance and the inner bag (2B) must be sufficiently flexible to allow proper collapse thereof upon dispensing.

Figure 2(b) schematically illustrates the temperature profiles of the inner (1A) and outer (1 B) layers as the preform is heated in the oven, transferred to the blow-moulding tool, undergoing a slight cooling, and blow-moulded to form a bag-in-container (2) (indicated by "BM" in the axis) where the preform is stretched and cooled rapidly. Note that the axes are not to scale and are not linear, some sections being expanded to the detriment of others to clarify the Figure. Any stress relaxation and crystallization substantially stops when the temperature of a layer is below Tg. It can be seen that the thermal histories of the two layers are quite different, which invariably has an influence on crystallization and stress relaxation of each of them, as represented by the shaded areas, X_{A}, X_{B}, under the curves (1A), (1B) of Figure 2(b). The high shear stresses induced in both layers during blow-moulding while cooling at high rate strongly affects the crystallinity and crystal configuration. Since shear stress build up is also dependent on temperature, the magnitude of the shear stress decreasing with increasing temperature, and thus shear induced crystallinity follows a similar trend, modelling is quite complex and falls out of the scope of the present description. Without being bound by any theory, it is believed that a smooth and reproducible delamination of the inner layer (2B) from the outer layer (2A) upon injection of pressurized gas at the interface (2C) between the two layers can be obtained if the crystalline structure of the inner and outer layers (2A, 2B), at their interface (2C), differ sufficiently from one another as to yield only a weak bond between the two layers. The key to the control of the crystallinity of the inner and outer layers (2A, 2B) lies *inter alia* in the control of the temperatures of said layers as discussed above. To date, the thermal conditions were imposed mostly by the choice of the materials brought together to form the inner and outer layers of a bag-in-container. With the present invention, however, it is possible to twist these intrinsic thermal conditions and optimize them with the addition of heat additives to materials for forming the inner and outer layers, which could not be used in combination before. By adding heat absorbing additives to the outer layer it is possible, to substantially change the thermal histories of the inner and outer layers,
(a) to render them sufficiently different so as to yield a weak bond even with bond compatible materials, and/or
(b) to have both layers reach their respective blow moulding temperatures by infrared radiation substantially simultaneously, even if their respective values are very different from one another.

An overview of what is believed to represent the main factors influencing the crystallinity of the inner and outer layers after blow moulding and their adhesion to one another is reviewed below.
- the outer container (2A) stores more internal stresses than the inner bag (2B), as the structure of the former is frozen in a configuration (strained chains, deformed crystals) quite away from thermodynamic balance, which increases its mechanical properties, rendering it fit for its structural function in the bag-in-container; if too much internal stresses are stored in the material, it may warp upon exposure to a heat source, e.g., by exposure to the sun; The level of internal stresses may be decreased by increasing the blow moulding temperature of the outer layer by addition of heat absorbing additives.
- During blow-moulding, the inner layer is at a lower temperature than the outer layer, which allows to reduce the area X_{B} under the time-temperature curve and thus decrease the thermally induced crystallinity. Care must be taken that the blow moulding temperature yields a sufficiently short relaxation time for limiting the amount of shear induced crystallinity upon blow moulding,
- The cooling rate of the inner layer (1 B), is still sufficiently high to prevent formation of large crystals which would be detrimental to its flexibility and transparency, if the latter is an issue;
- The surfaces in contact at the interface (2C) between inner bag (2B) and outer container (2A) have a different surface tension due to substantially differing crystals configurations, yielding a poor adhesion between them, thus enhancing debonding of the inner bag (2B) from the outer container (2A) upon dispensing.

Including at least one additive allowing the difference in heating rates, Δ(dT/dt) = dTₒᵤₜ / dt - dTᵢₙ / dt , between the outer and inner layers, upon heating the preform in a radiation oven, is positive and greater than in the absence of said at least one additive expands the pressure-time-temperature window for the blow-moulding process in directions never explored before, resulting in easier processing and reduced failure rates of the the thus produced bag-in-containers.

A bag-in-container (2) of the present invention can thus be obtained by providing a preform as described above, heating the outer and inner layers (1A, 1B) in a radiation oven such that the difference in heating rates, Δ(dT/dt) = dTₒᵤₜ / dt - dTᵢₙ / dt , between the outer and inner layers is positive and greater than in the absence of said at least one additive until they reach their respective desired blow-moulding temperatures, T_{bm}, transferring the thus heated preform to a blow-moulding tool and fixing it at the level of the neck region with fixing means. This is followed by blow-moulding the thus heated preform to form a bag-in-container. The inner and outer layers (2A, 2B) of the thus obtained bag-in-container are connected to one another by an interface (2C) over substantially the whole of the inner surface of the outer layer (2A). Said interface (2C) is in fluid communication with the atmosphere through the vents (4). Advantageously, the vents were present in the preform prior to blow-moulding, preferably at the neck region which is not strained during blow-moulding and the vents can thus maintain their original geometry through the blow-moulding process.

It is essential that the interface (2C) between inner and outer layers (2A, 2B) releases in a consistent and reproducible manner upon creating a pressure gradient across the inner bag wall (2B). In particular, for pressure dispensing bag-in-containers, the pressure gradient is created by increasing the pressure in the region between inner bag (2B) and outer container (2A) by, e.g., blowing pressurized gas through the vents. For vacuum and gravity dispensing bag-in-containers, the pressure gradient is created by reducing the pressure inside the bag, and bringing the space between inner and outer layers in contact with a source of higher pressure, such as for example simply with ambient. The success of said bag release operation depends on a number of parameters, in particular, on the interfacial adhesive strength, the number, geometry, and distribution of the vents and, for pressure dispensing units, on the pressure of the gas injected. The interfacial strength is of course a key issue and can be modulated by the choice of the materials for the inner and outer layers (1 B) and (1 A), by the process parameters during blow-moulding and, according to the present invention, with the concentration of heat absorbing additives present in at least the outer layer (1A, 2A). As explained above the pressure-time-temperature window illustrated schematically in Figure 2(b) yields excellent results in terms of interfacial strength. The exact parameters used of course greatly depend on the materials selected for the inner and outer layers (1B) and (1A), but the optimization of the process parameters falls within the competence and practice of a person skilled in the art.

A container (2) as depicted in Figure 1(c), after filling with a liquid, such as a beverage like a soda or beer, is closed with a closure (8) applied to the mouth thereof. The closure (8) must comprise a first dispensing opening (10B) suitable for bringing in fluid communication the interior of the inner bag (2B) containing the liquid with ambient. Preferably, a dispensing tube is used. For pressure dispensing systems using an external source of pressurized gas, a second, gas opening 15B should be provided, preferably on the closure (8), to bring said source of pressurized gas in fluid communication with the interface (2C) between inner and outer layers (2A, 2B) via a vent (4).

In a particular embodiment of the present invention the preform, as illustrated in Figure 1(b), comprises a gap (1 C) containing air separating the inner and outer layers (1 B) and (1 A) over a substantial area of the preform's body and wherein said gap is in fluid communication with at least one interface vent (4). With such preform, the blow-moulding process advantageously comprises the following steps:
- in a first stage, a gas is blown into the space defined by the inner layer (1 B) to stretch the preform, whilst the air in the gap separating the preform inner and outer layers (1B) and (1A) is prevented from being evacuated by closing said at least one preform interface vent (4) with a valve located in the fixing means; and
- in a second stage, when the air pressure building up in said gap reaches a preset value, the valve opens thus allowing evacuation of the air enclosed in the gap.

By this method, the inner layer (1 B) is prevented from entering into contact with the outer layer (1A) by the air cushion enclosed within the gap separating the two layers when their respective temperatures are the highest. As stretching proceeds, the gap becomes thinner and air pressure within the gap increases. When the pressure reaches a preset value, the valve closing the vent opening releases, the air is ejected, and the inner layer (1B) is permitted to contact the outer layer (1A) and form an interface therewith at a stage where their respective temperatures have dropped to a level where adhesion between the layers cannot build up to any substantial level.

A release agent may be applied at the interface on either or both surfaces of the inner and outer layers (1 B), (1A) which are to form the interface of the bag-in- container. In the case the outer layer (1A) is injection moulded onto the inner layer (1B), the release agent can be applied at the outer surface of the inner layer (1 B) prior to moulding the outer layer (1A). Any release agents available on the market and best adapted to the material used for the preform and resisting the blowing temperatures, like silicon- or PTFE-based release agents (e.g., Freekote) may be used. The release agent may be applied just prior to loading the preforms into the blowmoulding unit, or the preforms may be supplied pretreated.

The application of a release agent is particularly beneficial with respect to the design of the inner layer (2B). Indeed, lowering the interfacial adhesive strength facilitates delamination of the inner layer (1 B) from the outer layer (1A) and hence reduces stress exerted on the inner layer (1 B) upon delamination, as such the inner layer (1 B) can be designed very thin and flexible without risking that the inner layer (1 B) is damaged upon delamination.

With a preform according to the present invention, however, the amount of release agent to lower the interfacial strength between inner bag (2B) and outer container (2A) can be reduced with respect to prior art applications.

Integrally blow-moulded bag-in-containers (2) can be produced according to the present invention from two layer preforms (1) wherein the inner layer (1B) has a blow-moulding temperature substantially lower than the outer layer (1A). The inner layer releases consistently, repeatedly, and smoothly upon use even in the foregoing layers combinations due to a unique control of the crystallinity of the inner and outer layers (2A, 2B) at their interface (2C). Bag-in-containers (2) according to the present invention are particularly suitable for dispensing beverages, in particular carbonated beverages, such as sodas and beer.

## Claims

1. A preform (1) for blow-moulding a dispensing bag-in-container (2), said preform comprising an inner layer (1B) and an outer layer (1 A), wherein said preform (1) forms a two layer container (2) upon heating followed by blow-moulding, and wherein the obtained inner layer (2B) of said container releases from the obtained outer layer (2A) upon introduction of a pressurized gas at a point of interface (4) between said two layers; **characterized in that**,
the inner and/or outer layers (1A, 1 B) include at least one additive in a concentration such that the difference in heating rates, Δ(dT/dt) = dTₒᵤₜ / dt - dTᵢₙ / dt , between the outer and inner layers, upon heating the preform in a radiation oven emitting in a given radiation wavelength spectrum, is positive and greater than in the absence of said at least one additive.

2. A preform according to claim 1, wherein the type and amount of additives in the inner and/or outer layer (1 A, 1 B) of said preform are such as to allow both the inner layer (1 B) and the outer layer (1A) to reach their desired blow-moulding temperatures, T_{bm,in} and T_{bm,out}, substantially simultaneously upon heating the preform in said radiation oven.

3. The preform according to claim 1 or 2, wherein the inner layer (1B) has a blowmoulding temperature lower that the one of the outer layer (1A).

4. The preform according to any of claims 1 to 3, wherein the inner layer (1 B) and outer layer (1A) each comprises a semicrystalline material, preferably selected from PET, PEN, PTT, PA, PP, PE, HDPE, EVOH, PGAc, PLA, and copolymers thereof.

5. The preform according to any of the preceding claims, wherein the outer layer (1A) comprises at least one heat absorbing additive, said at least one heat absorbing additive being preferably selected from the group of energy absorbing additives and colorants **characterized by** an absorption spectrum having peaks in the wavelength range.comprised between 700 and 20,000 nm, preferably, between 1,000 and 15,000 nm, more preferably between 5,000 and 12,000 nm, most prefetably between.6,000 and 10,000 nm

6. The preform according to the preceding claim, wherein the energy absorbing additive comprised in the outer layer (1A) is a member being selected from the group of carbon black, graphite, diamond dust, diazonium salts, sulphonium salts, sulphoxonium salts, and iodonium salts.

7. The preform according to any of the preceding claims, wherein the inner layer (1 B) comprises an additive reflecting at least a portion of a radiation ranging from 700 and 20,000 nm, preferably, between 1,000 and 15,000 nm, more preferably between 5,000 and 12,000 nm, most prefetably between.6,000 and 10,000 nm.

8. A process for producing a dispensing bag-in-container comprising the following steps:
• providing a radiation oven emitting radiation in a given wavelength spectrum;
• providing a preform (1) according to any of the preceding claims;
• heating the inner and outer layers (1 B, 1A) of said preform to their respective blow-moulding temperatures, T_{bm,in}, T_{bmout}, in said radiation oven;
• transferring the thus heated preform to a blowmoulding tool,
• blow-moulding the thus heated preform to form a bag-in-container (2).

9. The process according to the preceding claim, wherein both the inner layer (1 B) and the outer layer (1A) reach their desired blow-moulding temperatures, T_{bm,in}, T_{bm,out}, substantially simultaneously upon heating the preform in said radiation oven.

10. The process according to claims 8 or 9 wherein the blowmoulding temperature, T_{bm,in}, of the inner layer (1 B) is lower than the one, T_{bm,out}, of the outer layer (1 B), the differnence, ΔT_{bm}, in blow moulding temperatures between the inner and outer layers being preferably at least 5°C, more preferably 10°C, most preferably at least 20°C.

11. The process according to any of claims 8 to 10, wherein the radiation oven is an infrared oven emitting radiations at least in a wavelength range.comprised between 700 and 20,000 nm, preferably, between 1,000 and 15,000 nm, more preferably between 5,000 and 12,000 nm, most prefetably between.6,000 and 10,000 nm.

12. A bag-in-container made by a process according to any of claims 8 to 11.
